# EUROPÄISCHE PATENTANMELDUNG

(11) **EP 3 176 391 A1**
(43) Veröffentlichungstag der Anmeldung: **07.06.2017**
(21) Anmeldenummer: 16198461.2
(22) Anmeldetag: 11.11.2016
(51) Int. Cl.: F01L 1/047

(54) **VERSTELLBARE NOCKENWELLE**

(30) Priorität: 02.12.2015 DE 102015224011
(71) Anmelder: Mahle International GmbH, 70376 Stuttgart (DE)
(72) Erfinder: FLENDER, Thomas, 71735 Eberdingen (DE); ROMMEL, Jürgen, 71576 Burgstetten (DE); STEICHELE, Stefan, 70839 Gerlingen (DE)
(74) Vertreter: BRP Renaud & Partner mbB Rechtsanwälte Patentanwälte Steuerberater

(57) **Zusammenfassung**

Die Erfindung betrifft eine verstellbare Nockenwelle (1) mit
- einer Innenwelle (2) und einer koaxial dazu angeordneten Außenwelle (3),
- einem ersten Nocken (5), der drehfest mit der Innenwelle (2) verbunden ist,
- einem zweiten Nocken (7), der drehfest mit der Außenwelle (3) verbunden ist.

Erfindungswesentlich ist dabei,
- dass an der Innenwelle (2) eine zur Außenwelle (3) hin offene Ausnehmung (12), insbesondere eine Ringnut, vorgesehen ist,
- dass zumindest ein Axiallagerelement (13) vorgesehen ist, welches einerseits in einer Ausnehmung (16) der Außenwelle (3) fixiert ist und andererseits in die Ausnehmung (12) der Innenwelle (2) eingreift.

## Beschreibung

Die vorliegende Erfindung betrifft eine verstellbare Nockenwelle mit einer Innenwelle und einer koaxial dazu angeordneten Außenwelle gemäß dem Oberbegriff des Anspruchs 1. Die Erfindung betrifft außerdem eine mit einer solchen Nockenwelle ausgestattete Brennkraftmaschine.

Verstellbare Nockenwellen sind hinlänglich bekannt und dienen der Beeinflussung von Ventilsteuerzeiten. Die Ventilsteuerzeiten werden dabei durch ein Verdrehen einer Innenwelle relativ zu einer Außenwelle verändert, wobei mit der Innenwelle erste Nocken drehfest verbunden sind und mit der Außenwelle zweite Nocken. Durch das gegeneinander Verstellen der ersten und zweiten Nocken können die Ventilöffnungszeiten bzw. Ventilschließzeiten verkürzt oder verlängert werden. Zum Verdrehen der Innenwelle relativ zur Außenwelle wird üblicherweise ein sogenannter Phasensteller verwendet, dessen Rotor drehfest mit der Innenwelle und dessen Stator drehfest mit der Außenwelle verbunden ist. Eine Axiallagerung einer derartig verstellbaren Nockenwelle erfolgt dabei üblicherweise über eine axial feste Verbindung der Innenwelle mit dem Rotor, wobei wiederum der Rotor des Phasenstellers axial gegenüber dem Stator desselben gelagert ist, so dass bei einer axial festen Verbindung des Stators mit der Außenwelle diese über den Phasensteller axial gegen die Innenwelle gelagert ist. Die Axiallagerung der Nockenwelle über den Phasensteller erfordert jedoch eine toleranzarme und damit hochpräzise Anbindung sowohl der Innenwelle an den Rotor des Phasenstellers als auch der Außenwelle an den Stator desselben. Insgesamt erfordert dies somit eine vergleichsweise hohe Fertigungsgenauigkeit und damit vergleichsweise hohe Kosten.

Die vorliegende Erfindung beschäftigt sich daher mit dem Problem, für eine verstellbare Nockenwelle der gattungsgemäßen Art eine verbesserte oder zumindest eine alternative Ausführungsform anzugeben, die sich insbesondere durch eine alternative und kostengünstigere Axiallagerung der Nockenwelle auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, eine Axiallagerung einer verstellbaren Nockenwelle erstmals nicht über eine separate Axiallagerung einer Innenwelle an einem Rotor und einer Außenwelle an einem Stator eines Phasenstellers zu bewirken, sondern die Innenwelle direkt an der Außenwelle axial zu lagern und dadurch die Möglichkeit zu eröffnen, entweder nur die Außenwelle am Stator des Phasenstellers oder die Innenwelle am Rotor des Phasenstellers oder aber die Außenwelle an einer separaten Stelle in einem Lagerrahmen oder eine Zylinderkopfhaube zu lagern und dadurch bezüglich des Phasenstellers insgesamt schwimmend lagern zu können. Die beiden erstgenannten Alternativen bieten jedoch ebenfalls bereits die Möglichkeit, höhere Fertigungstoleranzen auszugleichen, da nicht wie bislang erforderlich sowohl die Innenwelle als auch die Außenwelle, sondern wahlweise nur eine dieser beiden Wellen oder gar keine mit dem Phasensteller in Axialrichtung fixiert werden muss. Die erfindungsgemäße verstellbare Nockenwelle weist dabei in bekannter Weise eine Innenwelle sowie eine koaxial dazu angeordnete Außenwelle auf, ebenso wie einen ersten Nocken, der drehfest mit der Innenwelle verbunden ist, und einen zweiten Nocken, welcher drehfest mit der Außenwelle verbunden ist. Erfindungsgemäß ist nun zur Axiallagerung der verstellbaren Nockenwelle an der Innenwelle eine zur Außenwelle hin offene Ausnehmung, beispielsweise eine sich zumindest kreissegmentartig über einen Winkelbereich erstreckende Nut, insbesondere eine Ringnut, vorgesehen, in welche zumindest ein Axiallagerelement eingreift, welches zugleich in einer Ausnehmung der Außenwelle fixiert ist. Die Ausnehmung kann dabei partiell in dem Wirkbereich des Drehwinkels den Stift bzw. das Axiallagerelement entsprechend führen. Am naheliegendsten ist aus Fertigungssicht hierbei eine zumindest partiell umlaufende Nut. Durch die direkte Axiallagerung der Innenwelle an der Außenwelle kann die erfindungsgemäße, verstellbare Nockenwelle insgesamt in Axialrichtung gelagert werden, indem diese bspw. lediglich über die Innenwelle oder die Außenwelle am Phasensteller gelagert ist. Insbesondere ist es hierdurch auch möglich, den Stator des Phasenstellers (bzw. den Rotor) in Axialrichtung schwimmend zum Rotor (bzw. zum Stator) des Phasenstellers zu lagern. Da Phasensteller in der Regel ein geringes Axial- und Radialspiel aufweisen, sind sie bezüglich fertigungsbedingter Konzentrizitäts- und Winkelversatzfehler bei der Nockenwellenanbindung empfindlich gegenüber einem möglichen Klemmen. Durch die schwimmende Lagerung kann die Klemmneigung positiv beeinflusst werden.

Bei einer vorteilhaften Weiterbildung der erfindungsgemäßen Lösung ist das Axiallagerelement als Axiallagerstift ausgebildet, der durch eine Durchgangsöffnung in der Außenwelle gesteckt ist und in die Ausnehmung der Innenwelle eingreift. Selbstverständlich können hierbei auch zwei gegenüberliegende Axialstifte vorgesehen werden, die die Außenwelle in zugehörigen Durchgangsöffnungen durchgreifen und in die Ausnehmung (Nut/Ringnut) der Innenwelle eingreifen. Der große Vorteil einer derartigen Axiallagerung der Innenwelle relativ zur Außenwelle besteht in der vergleichsweise einfachen Herstellung der Axiallagerung sowie in der Möglichkeit, durch Entfernen des zumindest einen Axiallagerstifts die Axiallagerung auch wieder aufzuheben und bspw. die Innenwelle aus der Außenwelle zu entnehmen.

Rein theoretisch kann dabei die Ausnehmung an der Innenwelle vollständig umlaufend ausgebildet, wobei es selbstverständlich alternativ auch denkbar ist, dass diese nur über einen jeweiligen Umfangsbereich, bspw. geringfügig größer als der Winkelverstellbereich der Innenwelle zur Außenwelle ausgebildet ist. Besonders die zuletzt genannte Variante bietet dabei den großen Vorteil, einer geringeren Querschnittsschwächung der Innenwelle.

Bei einer weiteren vorteilhaften Ausführungsform der erfindungsgemäßen Lösung ist in der Außenwelle eine zur als Ringnut ausgebildeten Ausnehmung der Innenwelle offene, weitere Ringnut vorgesehen, wobei das zumindest eine Axiallagerelement als Sprengring ausgebildet ist, der in montiertem Zustand sowohl in die Ringnut der Innenwelle, als auch in die weitere Ringnut der Außenwelle eingreift. Zur Montage der Innenwelle in der Außenwelle wird dabei zunächst der Sprengring zusammengedrückt und damit hinsichtlich seines Durchmessers verkleinert, so dass er bei in der nach außen offenen Ringnut der Innenwelle angeordnetem Zustand zusammen mit der Innenwelle in die Außenwelle eingeschoben werden kann. Erreicht der Sprengring die in der Außenwelle vorgesehene weitere Ringnut, so federt er auf und greift dadurch in die Ringnut der Außenwelle ein. Durch das beidseitige Eingreifen des als Sprengring ausgebildeten Axiallagerelements sowohl in die Ringnut der Innenwelle, als auch in die Ringnut der Außenwelle, kann eine vergleichsweise einfach zu montierende aber dennoch äußerst zuverlässige Axiallagerung der Innenwelle relativ zur Außenwelle erreicht werden. Eine Demontage einer solchen Nockenwelle erfolgt üblicherweise durch ein Herausziehen der Innenwelle aus der Außenwelle, bei welchem der Sprengring zerstört wird, wobei es alternativ auch denkbar ist, dass im Bereich der nach innen offenen, weiteren Ringnut in der Außenwelle Durchgangsöffnungen vorgesehen sind, die das Einführen eines Werkzeugs und dadurch das Zusammendrücken des Sprengrings zur Demontage erlauben. Diese Durchgangsöffnungen sind selbstverständlich nur zur Demontage des Sprengrings offen, während des Betriebs der Nockenwelle jedoch geschlossen, um eine Ölleckage wirkungsvoll verhindern zu können.

Bei einer weiteren vorteilhaften Ausführungsform der erfindungsgemäßen Lösung ist zumindest ein zweiter Nocken durch einen thermischen Fügesitz, durch Schweißen, durch Löten, durch Kleben oder durch einen Presssitz auf der Außenwelle fixiert. Bereits diese nicht abschließende Aufzählung lässt erahnen, welche mannigfaltige Möglichkeiten zur Fixierung des zumindest einen zweiten Nockens auf der Außenwelle gegeben sind, wobei insbesondere das Herstellen eines thermischen Fügesitzes vielfältig angewandt wird. Hierzu wird der zumindest eine zweite Nocken erwärmt und/oder die Außenwelle gekühlt. Durch einen Temperaturausgleich erfolgt somit ein radiales Verpressen der beiden Komponenten miteinander und dadurch ein Fixieren des zumindest einen zweiten Nockens auf der Außenwelle.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch,
- Fig. 1: eine Schnittdarstellung durch eine erfindungsgemäße verstellbare Nockenwelle mit einem als Axiallagerstift ausgebildeten Axiallagerelement,
- Fig. 2: eine Darstellung wie in Fig. 1, jedoch mit einem als Sprengring ausgebildeten Axiallagerelement,
- Fig. 3: eine Darstellung wie in Fig. 1, jedoch zusätzlich mit einem weiteren als Axiallagerstift ausgebildeten Axiallagerelement und einem Phasensteller.

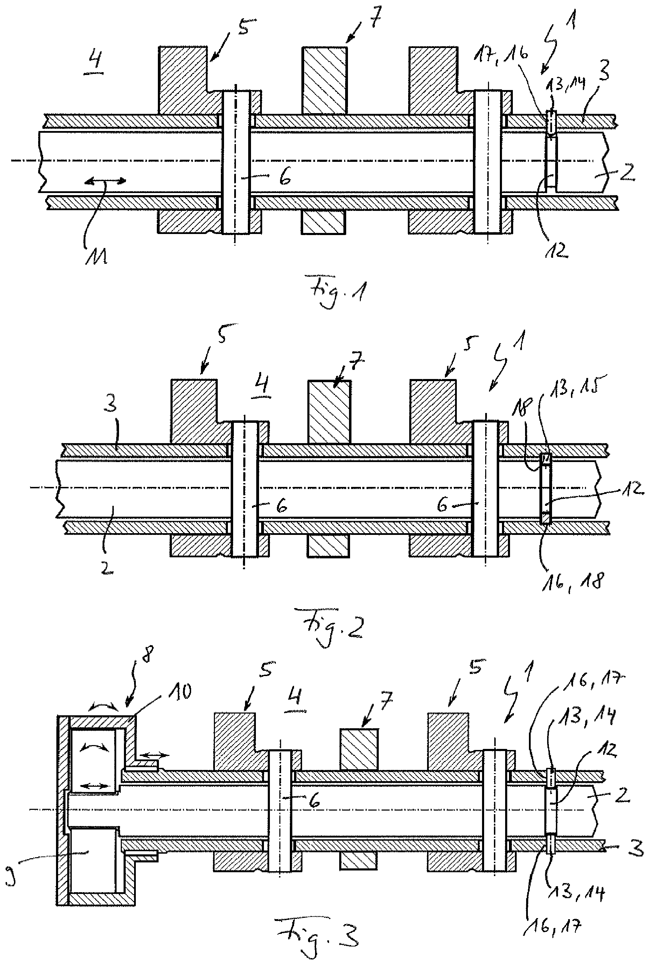

Entsprechend den Fig. 1 bis 3, weist eine erfindungsgemäße verstellbare Nockenwelle 1 eine Innenwelle 2 sowie eine koaxial dazu angeordnete Außenwelle 3 auf. Eine derartige verstellbare Nockenwelle 1 kann bspw. in einer Brennkraftmaschine, insbesondere in einem Kraftfahrzeug, angeordnet sein. Desweiteren vorgesehen sind dabei in bekannter Weise zumindest ein erster Nocken 5, welcher über einen entsprechenden Stift 6 drehfest mit der Innenwelle 2 verbunden ist, sowie zumindest ein zweiter Nocken 7, welcher drehfest mit der Außenwelle 3 verbunden ist. Durch ein Verdrehen der Innenwelle 2 relativ zur Außenwelle 3 wird somit der erste Nocken 5 relativ zum zweiten Nocken 7 verdreht, da der erste Nocken 5 zwar drehfest mit der Innenwelle 2, jedoch drehbar auf der Außenwelle 3 gelagert ist. Eine Relativverdrehung der Innenwelle 2 zur Außenwelle 3 erfolgt dabei über einen Phasensteller 8 (vgl. Fig. 3), dessen Rotor 9 drehfest mit der Innenwelle 2 und dessen Stator 10 drehfest mit der Außenwelle 3 verbunden ist.

Bislang wurde eine Axiallagerung der Nockenwelle 1 üblicherweise über eine axiale Fixierung der Innenwelle 2 am Rotor 9 des Phasenstellers 8 sowie eine axiale Fixierung der Außenwelle 3 am Stator 10 des Phasenstellers 8 bewirkt. Dies bedingt jedoch eine vergleichsweise hohe Fertigungsgenauigkeit und dadurch vergleichsweise teure Herstellungskosten. Die erfindungsgemäße Nockenwelle 1 soll es nun erstmals ermöglichen, die Innenwelle 2 direkt in Axialrichtung 11 fest an der Außenwelle 3 zu lagern und dadurch die gesamte Nockenwelle 1 bspw. schwimmend gegenüber dem Phasensteller 8 zu lagern, zumindest aber entweder die Innenwelle 2 schwimmend zum Rotor 9 oder die Außenwelle 3 schwimmend, das heißt in Axialrichtung 11 verschieblich zum Stator 10 des Phasenstellers 8.

Erfindungsgemäß ist deshalb an der Innenwelle 2 eine vorzugsweise umlaufende und zur Außenwelle 3 hin offene Ausnehmung 12, beispielsweise eine Ringnut, vorgesehen, ebenso wie zumindest ein Axiallagerelement 13, welches bspw. gemäß den Fig. 1 und 3 als Axiallagerstift 14 und gemäß der Fig. 2 als Sprengring 15 ausgebildet sein kann und welches einerseits in einer Ausnehmung 16 der Außenwelle 3 fixiert ist und andererseits in die als Ringnut ausgebildete Ausnehmung 12 der Innenwelle 2 eingreift.

Betrachtet man dabei die Ausführungsformen der erfindungsgemäßen verstellbaren Nockenwelle 1 gemäß den Fig. 1 und 2, so kann man erkennen, dass hier das Axiallagerelement 13 als Axiallagerstift 14 ausgebildet ist und die Ausnehmung 16 als Durchgangsöffnung 17, so dass der Axiallagerstift 14 durch die Durchgangsöffnung 17 der Außenwelle 3 gesteckt und in die Ausnehmung 12 der Innenwelle 2 eingreift. Hierbei kann entweder lediglich ein einziger Axiallagerstift 14 vorgesehen sein (vgl. Fig. 1) oder aber bspw. zwei gegenüberliegende Axiallagerstifte 14, die in gegenüberliegenden Durchgangsöffnungen 17 (Ausnehmungen 16) der Außenwelle 3 gesteckt sind und in die Ausnehmung 12 der Innenwelle 2 eingreifen. Unter dem Begriff "Ausnehmung 16" soll somit nicht nur eine sacklochartige Ausnehmung verstanden werden, sondern selbstverständlich auch eine Durchgangsöffnung.

Die mit dem zumindest einen Axiallagerstift 14 ausgebildete Nockenwelle 1 bietet dabei den großen Vorteil, dass die Nockenwelle 1 sowohl einfach zu Montieren, als ggf. auch wiederum einfach zu Demontieren ist. Hierzu muss lediglich der zumindest eine Axiallagerstift 14 aus der zugehörigen Ausnehmung 16 bzw. Durchgangsöffnung 17 herausgezogen werden.

Betrachtet man die gemäß der Fig. 2 dargestellte Ausführungsform der erfindungsgemäßen Nockenwelle 1, so kann man bei dieser erkennen, dass die Ausnehmung 16 in der Außenwelle 3 als eine zur Ausnehmung 12 der Innenwelle 3 offene, weitere Ringnut 18 ausgebildet ist, in welche das als Sprengring 15 ausgebildete Axiallagerelement 13 eingreift. Der Sprengring 15 greift somit in montiertem Zustand sowohl in die Ausnehmung 12 der Innenwelle 2 als auch in die Ringnut 18 der Außenwelle 3 ein. Eine Montage dieser Art von erfindungsgemäßen Nockenwelle 1 erfolgt dabei durch ein Aufsetzen des als Sprengrings 15 ausgebildeten Axiallagerelements 13 auf die Innenwelle 2 im Bereich der Ausnehmung 12, sowie einem anschließenden Zusammendrücken des Sprengrings 15, so dass dieser zusammen mit der Innenwelle 2 in die Außenwelle 3 eingeschoben werden kann. Erreicht dabei der Sprengring 15 die Ausnehmung 16, das heißt die weitere Ringnut 18 in der Außenwelle 3, federt er auf und greift dadurch in die Ringnut 18 ein und sichert die Innenwelle 2 relativ zur Außenwelle 3 in Axialrichtung 11.

Ein Fixieren des zumindest einen zweiten Nockens 7 auf der Außenwelle 3 kann dabei bspw. mittels eines thermischen Fügesitzes, durch Schweißen, durch Löten, durch Kleben oder aber durch einen Presssitz erfolgen, wobei die genannten Befestigungsmethoden nicht abschließend sind und entsprechend den jeweiligen Anforderungen ausgewählt werden.

Mit der erfindungsgemäßen Nockenwelle 1 ist es somit erstmals möglich, bspw. den Stator 10 des Phasenstellers 8 axial fest mit der Außenwelle 3, den Rotor 9 jedoch axial beweglich mit der Innenwelle 2 zu verbinden, oder alternativ den Stator 10 axial beweglich mit der Außenwelle 3 und den Rotor 9 axial fest mit der Innenwelle 2 zu verbinden. Wiederum alternativ ist es auch denkbar, sowohl den Stator 10 axial beweglich mit der Außenwelle 3 als auch den Rotor 9 axial beweglich mit der Innenwelle 2 zu verbinden und damit eine komplett schwimmende Lagerung der Nockenwelle 1 relativ zum Phasensteller 8 zu bewirken. In diesem Fall müsste die erfindungsgemäße Nockenwelle 1 anderweitig, bspw. in einer Zylinderkopfhaube, axial gelagert werden. Im Unterschied zu den aus dem Stand der Technik bekannten Axiallagermethoden, ermöglicht die erfindungsgemäße Nockenwelle 1 jedoch den Ausgleich größerer Fertigungstoleranzen, wodurch die Herstellungsgenauigkeit und damit auch die Herstellungskosten reduziert werden können.

## Patentansprüche

1. Verstellbare Nockenwelle (1) mit
- einer Innenwelle (2) und einer koaxial dazu angeordneten Außenwelle (3),
- einem ersten Nocken (5), der drehfest mit der Innenwelle (2) verbunden ist,
- einem zweiten Nocken (7), der drehfest mit der Außenwelle (3) verbunden ist,
**dadurch gekennzeichnet,**
- **dass** an der Innenwelle (2) eine zur Außenwelle (3) hin offene Ausnehmung (12), insbesondere eine Ringnut, vorgesehen ist,
- **dass** zumindest ein Axiallagerelement (13) vorgesehen ist, welches einerseits in einer Ausnehmung (16) der Außenwelle (3) fixiert ist und andererseits in die Ausnehmung (12) der Innenwelle (2) eingreift.

2. Nockenwelle nach Anspruch 1,
**dadurch gekennzeichnet,**
**dass** das Axiallagerelement (13) als Axiallagerstift (14) ausgebildet ist, der durch eine als Durchgangsöffnung (17) ausgebildete Ausnehmung (16) in der Außenwelle (3) gesteckt ist und in die Ausnehmung (12) der Innenwelle (2) eingreift.

3. Nockenwelle nach Anspruch 2,
**dadurch gekennzeichnet,**
**dass** zwei als Axiallagerstifte (14) ausgebildete Axiallagerelemente (13) vorgesehen sind, die durch zwei gegenüberliegende, als Ausnehmungen (16) ausgebildete Durchgangsöffnungen (17) in der Außenwelle (3) gesteckt sind und in die Ausnehmung (12) der Innenwelle (2) eingreifen.

4. Nockenwelle nach einem der Ansprüche 1 bis 3,
**dadurch gekennzeichnet,**
**dass** sich die Ausnehmung (12) der Innenwelle (2) zumindest teilweise um den Außenumfang der Innenwelle (2) erstreckt.

5. Nockenwelle nach einem der vorhergehenden Ansprüche,
**dadurch gekennzeichnet,**
- **dass** die Ausnehmung (12) als Ringnut ausgebildet ist und in der Außenwelle (3) eine dazu offene, weitere Ringnut (18) vorgesehen ist,
- **dass** das Axiallagerelement (13) als Sprengring (15) ausgebildet ist, der in montiertem Zustand in die Ausnehmung/Ringnut (12) der Innenwelle (2) und die Ringnut (18) der Außenwelle (3) eingreift.

6. Nockenwelle nach einem der Ansprüche 1 bis 5,
**dadurch gekennzeichnet,**
**dass** zumindest ein zweiter Nocken (7) durch einen thermischen Fügesitz, durch Schweißen, Löten, Kleben oder durch einen Presssitz auf der Außenwelle (3) fixiert ist.

7. Nockenwelle nach einem der vorhergehenden Ansprüche,
**dadurch gekennzeichnet,**
**dass** ein Phasensteller (8) mit einem Rotor (9) und einem Stator (10) vorgesehen ist, wobei
- der Stator (10) axial fest mit der Außenwelle (3) und der Rotor (9) axial beweglich mit der Innenwelle (2) verbunden sind, oder
- der Stator (10) axial beweglich mit der Außenwelle (3) und der Rotor (9) axial fest mit der Innenwelle (2) verbunden sind, oder
- der Stator (03) axial beweglich mit der Außenwelle (3) und der Rotor (9) axial beweglich mit der Innenwelle (2) verbunden sind.

8. Brennkraftmaschine (4) mit einer Nockenwelle (1) nach einem der Ansprüche 1 bis 7.
